(19) Europäisches Patentamt
European Patent Office
Office européen des brevets

(11) Veröffentlichungsnummer: **0 435 103 A1**

# (12) EUROPÄISCHE PATENTANMELDUNG

(21) Anmeldenummer: **90124170.3**

(22) Anmeldetag: **14.12.90**

(51) Int. Cl.5: **D01F 11/14**, C03C 25/02, C08L 63/02, C08F 2/30, C08J 5/10

(30) Priorität: **23.12.89 DE 3942858**

(43) Veröffentlichungstag der Anmeldung: **03.07.91 Patentblatt 91/27**

(84) Benannte Vertragsstaaten: **CH DE FR GB IT LI NL**

(71) Anmelder: **BASF Aktiengesellschaft**
**Carl-Bosch-Strasse 38**
**W-6700 Ludwigshafen(DE)**

(72) Erfinder: **Kroker, Joerg, Dr.**
**Jahnstrasse 11**
**W-6730 Neustadt(DE)**
Erfinder: **Vargiu, Silvio, Dr.**
**Via Roma 104/55**
**Casatenovo (Como)(IT)**

## (54) Reaktiv-Emulgatoren enthaltende wässrige Reaktionsharzdispersionen als Schlichtemittel für Kohlenstoff- und Glasfasern.

(57) Schlichtemittel für Kohlenstoff- und Glasfasern auf der Grundlage einer wäßrigen Dispersion, enthaltend ein Epoxidharz und 5 bis 40 Gew.-%, bezogen auf das Epoxidharz, eines nichtionischen Emulgators, dadurch gekennzeichnet, daß der Emulgator tertiäre Aminogruppen und/oder Etherbrücken enthält und mindestens einen mit dem Epoxidharz umsetzungsfähigen, funktionellen Rest, vorzugsweise einen Glyoicyl-Rest und mindestens einen emulgierend wirkenden Rest aufweist, der vorzugsweise endständig eine Polyethylenglykolgruppe trägt.



Xerox Copy Centre

# REAKTIV-EMULGATOREN ENTHALTENDE WÄSSRIGE REAKTIONSHARZDISPERSIONEN ALS SCHLICHTE-MITTEL FÜR KOHLENSTOFF- UND GLASFASERN

Beschreibung

Die Erfindung betrifft ein Schlichtemittel für Kohlenstoff- und Glasfasern auf der Grundlage einer wäßrigen Dispersion eines Reaktionsharzes und eines Emulgators, welcher reaktive funktionelle Gruppen trägt, die mit dem Matrixharz während des Aushärtungsprozesses des aus Fasern und Matrixharz hergestellten Halbzeugs reagieren können.

Insbesondere handelt es sich um eine wäßrige Dispersion eines Epoxidharzes einerseits und eines Glycidyl-Einheiten aufweisenden Emulgators andererseits.

Kohlenstoff-Fasern bestehen aus mehreren hundert bis hunderttausend Einzelfilamenten mit einem Durchmesser von ca. 5 bis 20 $\mu$m und weisen typischerweise eine Zugfestigkeit von 1000 bis 7000 MPa und einen Elastizitätsmodul von 200 bis 700 GPa auf. Einzelheiten sind beispielsweise beschrieben in M.S. Dresselhaus et al., "Graphite Fibers and Filaments", Springer Series in Material Science, Vol. 5, Springer Verlag, Berlin (1988).

Die Kombination von hervorragenden mechanischen Eigenschaften einerseits mit Leichtgewichtigkeit, hoher Wärmefestigkeit und chemischer Widerstandsfähigkeit andererseits hat dazu geführt, daß diese Materialien vermehrt als Verstärkungselemente in Verbundwerkstoffen eingesetzt werden. Von besonderem Interesse sind carbonfaserverstärkte Kunststoffe (CFK), deren Matrices Reaktionsharze, z.B. Epoxidharze, ungesättigte Polyesterharze, Vinylesterharze, Bismaleinimidharze oder Cyanatharze sind.

Es ist bekannt, daß die Haftung zwischen Matrix und Faser die mechanischen Eigenschaften von Faserverbundwerkstoffen entscheidend beeinflußt. Die Haftfestigkeit hängt in erster Linie ab von der Morphologie bzw. chemischen Natur der Faseroberfläche, der Schlichte und der Härtung des Halbzeugs.

Grundsätzlich besteht das Problem, daß Kohlenstoff-Fasern von Natur aus eine nur geringe Affinität zu allen Matrixharzen haben. Um die Haftfestigkeit zwischen Faser und Matrix zu erhöhen, werden die Fasern daher einer oxidativen Oberflächenbehandlung unterworfen, wie beispielsweise beschrieben in EP-A 293 867 oder EP-A 251 491. Auf diese Art werden funktionelle, reaktionsfähige Gruppen an der Faseroberfläche gebildet, die das Matrixharz chemisch binden können.

Eine andere Möglichkeit, die in der Technologie faserverstärkter Kunststoffe allgemein angewendet wird, ist das Aufbringen sog. Schlichten auf die Faser.

Die DE-A 3 718 171 resümiert, daß eine bestimmte Schlichte in der Regel vorteilhaft nur für jeweils eine Faserart und ein Matrixsystem verwendet werden kann.

Dies ist der Grund, weshalb in der Vergangenheit eine Vielzahl verschiedenartiger Schlichten vorgeschlagen wurde. Beispielsweise sind in der EP-A 256 852 ethylenisch ungesättigte Urethane als Schlichtemittel beschrieben. Damit behandelte Kohlenstoff-Fasern eignen sich insbesondere zur Verstärkung von UP- und VE-Harzen. Epoxidschlichten sind dagegen zu diesem Zweck nicht geeignet, da deren Affinität zu den genannten Matrixharzen nicht ausreichend ist; verbundwerkstoffe mit unzulänglicher interlaminarer Scherfestigkeit sind die Folge.

Mit Poly(phenylen)sulfid geschlichtete Kohlenstoff Fasern zum Einarbeiten in PPS als Matrixmaterial sind offenbart in der US-PS 4 489 129. Ebenso wird eine thermoplastische Schlichte vorgeschlagen in EP-A 216 518. Vorzugsweise werden die damit behandelten Fasern zur Verstärkung thermoplastischer Matrices verwendet.

Als weiteres Beispiel möge die DE-A 2 606 623 bzw. die US-PS 4 107 128 dienen. In Kombination mit Epoxidharz als Matrixmaterial sollen sich demnach mit Epoxidharzschlichten ausgerüstete Kohlenstoff-Fasern besonders gut eignen.

Über die Funktion der Schlichten als Haftungsvermittler hinaus soll durch das Aufbringen des Schlichtemittels auf die Fasern deren Verarbeitbarkeit in allen Verarbeitungsschritten bis hin zum fertigen Verbundwerkstoffbauteil verbessert werden. Das Faserbündel und seine sehr brüchigen Filamente müssen gegenüber mechanischer Faserbeanspruchung hinreichend geschützt sein, ohne jedoch dadurch an Textur, Drapierbarkeit und Spreizbarkeit zu verlieren. Keineswegs dürfen die Filamente durch das Schlichtemittel miteinander verklebt werden.

Schlichtemittel für fadenförmige Materialien werden entweder als Lösung oder wäßrige Dispersion auf das Fasermaterial appliziert. Gegenüber dem Lösungstyp, bei dem das Schlichtemittel - meist ein Harz - in einem niedrig siedenden organischen Lösungsmittel gelöst ist, verdienen die wäßrigen Dispersionen, bei denen das Schlichtemittel mit Hilfe eines Emulgierhilfsmittels in Wasser dispergiert ist, den Vorzug.

Der Vorteil der verarbeitungstechnischen Unbedenklichkeit muß jedoch, sofern die zu dispergierenden

Substanzen nicht selbstemulgierend wirken, mit der Präsenz eines Emulgierhilfsmittels, im folgenden als "Emulgator" bezeichnet, in der Schlichte erkauft werden. Typischerweise müssen - je nach Typ des zu dispergierenden Harzes und des verwendeten Emulgators - ca. 5 bis 50 Gew.-% an Emulgierhilfsmittel, bezogen auf das Harz eingesetzt werden, um hinreichend feinteilige, auch bei hoher Verdünnung lager- und scherstabile Dispersionen zu erhalten.

Beispielsweise beschreibt die DE-OS 34 36 211 ein Schlichtemittel für Kohlenstoff-Fasern in welchem als Emulgator ein Blockcopolymeres aus Ethylenoxid und Propylenoxid der schematischen Formel

$$HO(CH_2CH_2O)_x(\overset{\displaystyle CH_3}{\overset{|}{C}}HCH_2O)_y(CH_2CH_2O)_xH$$

zum Dispergieren von Epoxidharzen dient. Derartige Emulgatoren sind mangels entsprechender reaktiver Gruppen nicht befähigt, unter den Härtungsbedingungen, bei denen das Matrixmaterial - typischerweise ein Epoxidharz - ausgehärtet wird, zu reagieren. Damit ist eine chemische Anbindung des Emulgators an das Matrixmaterial während des Verbundwerkstoff-Fabrikationsprozesses sehr unwahrscheinlich. Das Auftreten von zusätzlichen Grenzflächen, nämlich zwischen Emulgator und Matrixharz, im Bereich der ohnehin kritischen Faser-Matrix Grenzfläche ist die Folge.

Auch die erwähnten selbstemulgierenden oder gar wasserlöslichen Schlichtemittel für Kohlenstoff-Fasern haben sich als nachteilig erwiesen, wie der US-PS 4 654 264 zu entnehmen ist. Verbundwerkstoffe, die mit derartigen Schlichten versehene Fasern enthalten, weisen schlechte mechanische Eigenschaften insbesondere bei gleichzeitiger Einwirkung von Hitze und Feuchtigkeit auf.

Aufgabe der Erfindung ist die Schaffung eines Schlichtemittels für die Behandlung von Kohlenstoff- und Glasfasern, die der Verstärkung von Epoxidharzmatrices dienen, welches frei von organischen Lösungsmitteln und damit unbedenklich hinsichtlich Toxizität und Entflammbarkeit ist, welches die Verarbeitbarkeit damit behandelter Faserstränge nicht nachteilig beeinflußt hinsichtlich Textur, Drapierbarkeit und Spreizbarkeit und welches eine ausgezeichnete chemische Kompatibilität mit Epoxidharzmatrices aufweist, um dadurch die Herstellung von Verbundwerkstoff-Bauteilen mit verbesserten physikalischen Eigenschaften, insbesondere unter heiß-feuchten Bedingungen, zu ermöglichen.

Die Aufgabe wird erfindungsgemäß gelöst durch eine Schlichte, die ein Epoxidharz und 5 bis 40 %, bezogen auf das Epoxidharz, eines nichtionischen Emulgators auf der Grundlage eines tertiären Amins enthält und/oder eines aromatisch-aliphatischen Ethers, welcher mindestens einen funktionellen Rest aufweist, der mindestens ein mit dem Epoxidharz umsetzungsfähiger, d.h. zur chemischen Anbindung an das Epoxidharz/Matrixharz unter den Härtungsbedingungen des Matrixharzes befähigter Rest, bevorzugt ein Glycidyl-Rest, ist, und mindestens einen emulgierend wirkenden Rest, bevorzugt einen Polyethylenoxidrest, aufweist. Der funktionelle Rest kann jede geeignete, substituierbare Stelle besetzen, während der emulgierende Rest am tertiären Stickstoffatom oder am Ethersauerstoff gebunden ist.

Das Grundgerüst des nachstehend als Reaktivemulgator bezeichneten nichtionischen Emulgators besteht aus einem aromatischen oder cycloaliphatischen Amin oder einem aromatisch-aliphatischen Polyether. Beispielsweise eignen sich als Amine Hydantoine (I), Cyanursäuren (II), Aminophenole (III) oder, bevorzugt Aminophenyle (IV) und als aromatisch-aliphatische Polyether Polyphenylol-alkyle (V, VI), Hydroxyphenole (VIII) und bevorzugt Bisphenole (VII), die jeweils reaktive Substituenten einerseits und emulgierend wirkende Substituenten andererseits aufweisen; nämlich

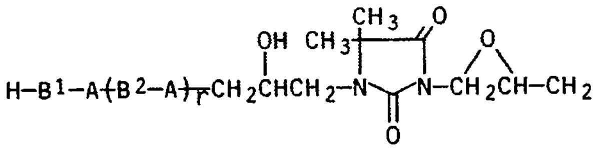

I

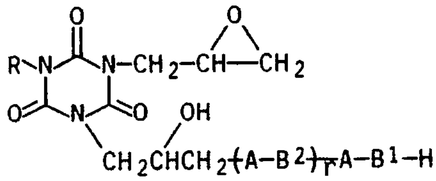

II

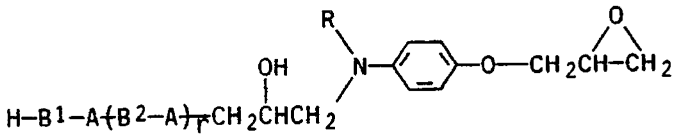

III

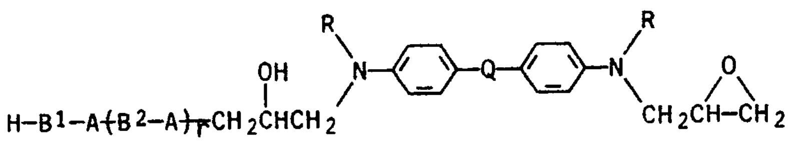

IV

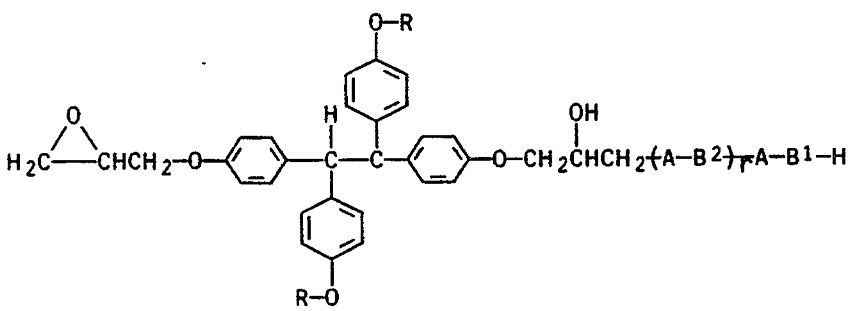

V

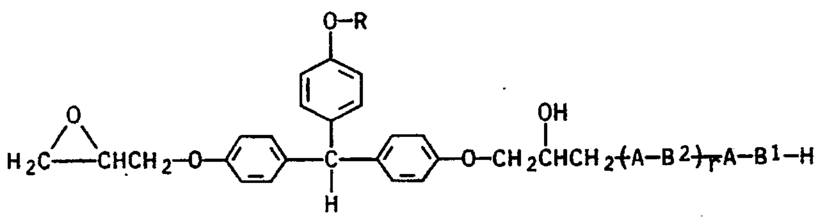

VI

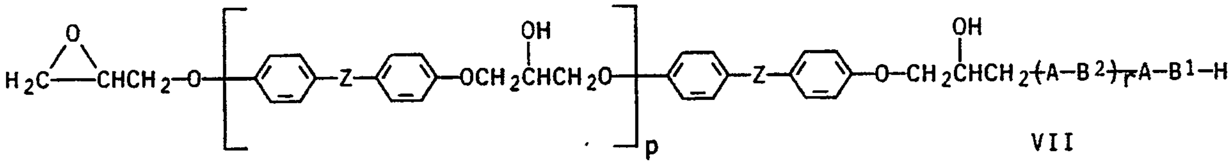

VII

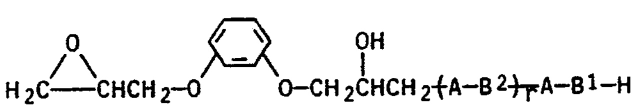

VIII

wobei die Symbole folgende Bedeutung haben:
R ist entweder der Rest

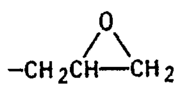 oder 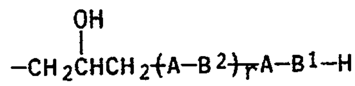

Q ist der zweiwertige Rest $-CH_2-$ oder

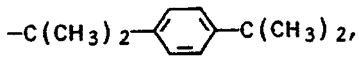

Z ist der Rest $-C(CH_3)_2-$, $-CH_2-$ oder

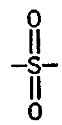 ,

p ist Null oder eine ganze oder gebrochene Zahl bis 5, A ist der Rest einer gesättigten oder ungesättigten aliphatischen oder cycloaliphatischen, oder einer aromatischen oder araliphatischen Dicarbonsäure mit 2 bis 20 C-Atomen,
$B^1$ ist der Rest eines Polyetherdiols der Struktur $[X_m,Y_n]$, wobei X Einheiten des Ethylenglykols und Y Einheiten des Propylenglykols bezeichnen, m einen Wert von 10 bis 500 und n Null oder ein Wert bis 100 bedeuten, wobei ferner X und Y in Blöcken oder einer anderen Verteilung angeordnet sind, mit der Maßgabe, daß sich am terminalen Ende mindestens 10 X-Einheiten befinden, $B^2$ ist der Rest eines Diols und r ist Null oder eine ganze Zahl bis 5. Bevorzugt trägt der Rest $B^2$ eine sekundäre OH-Gruppe, und r ist Null oder Eins.

Die Summe aller reaktiven und emulgierend wirkenden Substituenten im Molekül ist demnach mindestens 2, wobei je Molekül mindestens je ein reaktiver und ein emulgierend wirkender Rest vorhanden ist.

Das erfindungsgemäße Prinzip des Reaktivemulgators ermöglicht, die Vorzüge von Schlichtemitteln, die aus Lösung zu applizieren sind, d.h. frei von Emulgierhilfsstoffen sind, mit denen als wäßrige Dispersionen angewendeten zu kombinieren.

Zur Herstellung der als Reaktivemulgatoren eingesetzten tertiären Amine geht man zweckmäßig von den bekannten entsprechenden (Poly)glycidylaminen aus. Es sind dies beispielsweise N,N'-Diglycidyl-4,4-dimethylhydantoin (Ia), Triglycidylcyanursäure (IIa), N,N-Diglycidyl-p-Amino-phenolglycidylether (IIIa), N,N,N',N'-Tetraglycidyl-α,α-bis(4-aminophenyl)-p-diisopropyl-benzol (IVb), oder vorzugsweise N,N,N',N'-Tetraglycidyl-p-diphenyldiaminomethan (IVa).

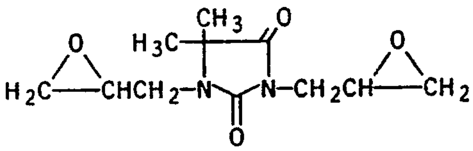 Ia

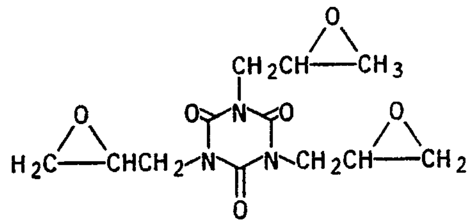 IIa

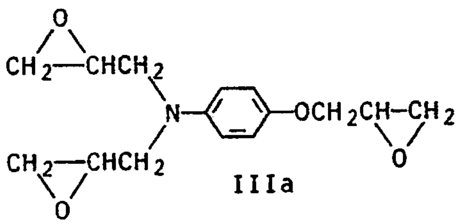
IIIa

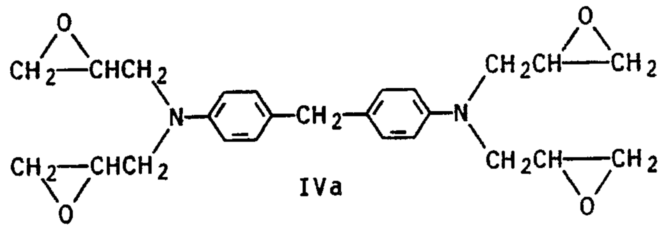
IVa

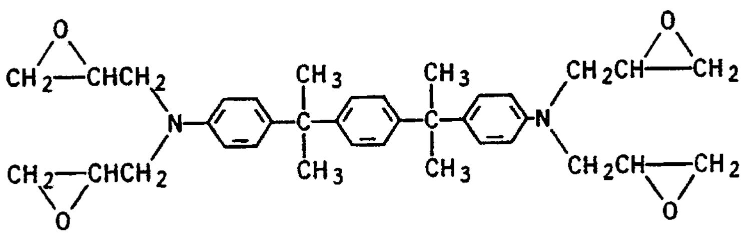 IVb

In Analogie geht man zur Herstellung der als Reaktivemulgatoren eingesetzten aromatisch-aliphatischen Ether zweckmäßig von den bekannten Polyglycidylethern aus. Es sind dies beispielsweise 1,1,2,2-Tetraphenylolethan-tetraglycidylether (Va), Triphenylolmethan-triglycidylether (VIa), Bisphenol-diglycidylether (VIIa,b,c) oder Hydroxyphenol-diglycidylether (VIIIa), nämlich

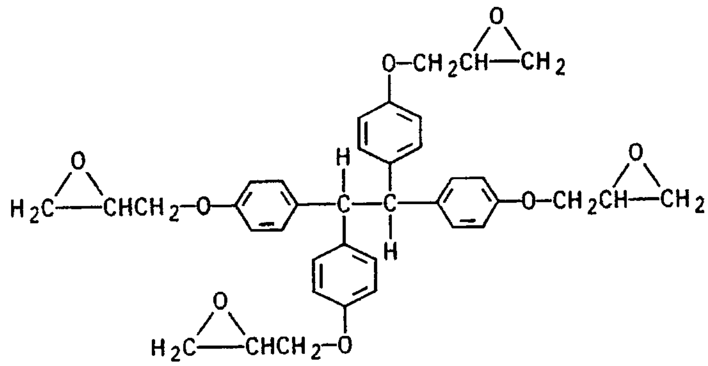

Va

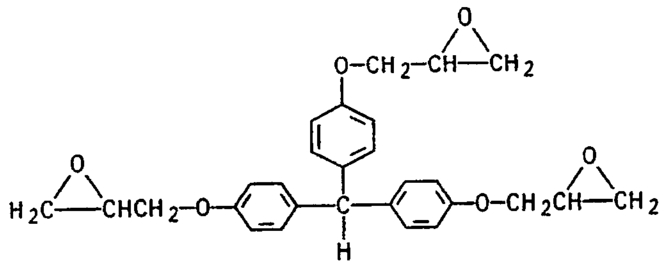

VIa

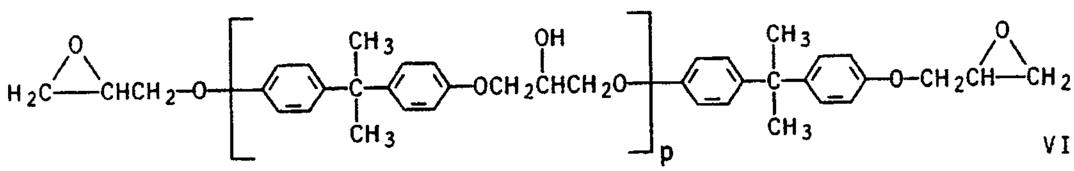

VIIa

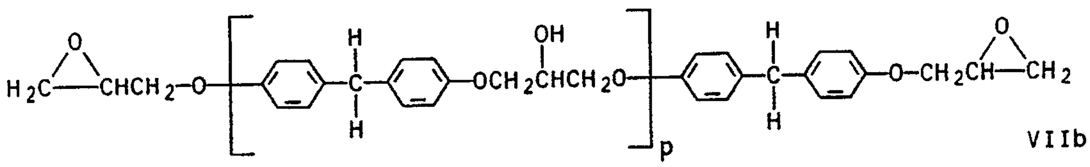

VIIb

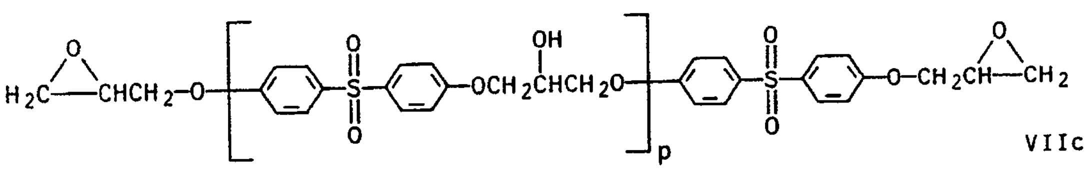

VIIc

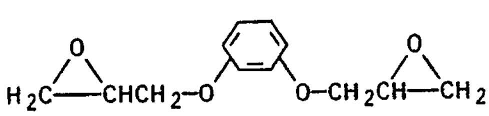

VIIIa

Je nach beabsichtigtem Zielprodukt werden dann unterschiedliche Reaktionspartner bereitgestellt:

Z.B. wird zunächst ein Äquivalent eines Polyetherdiols H-$B^1$-H mit etwa einem Äquivalent der Dicarbonsäure H-A-H bzw. deren Anhydrid in einer üblichen Kondensationsreaktion zu dem Halbester H-$B^1$-A-H umgesetzt.

Im zweiten Schritt werden soviel Äquivalente (Poly)glycidylamine bzw. Polyglycidylether und Halbester

$H-B^1-A-H$ umgesetzt, daß das erfindungsgemäße Zahlenverhältnis der Substituenten erreicht wird. Praktisch wird die Umsetzung solange fortgeführt, bis die Säurezahl unter etwa 2 mg KOH/g gesunken ist.

Eine andere Herstellungsmöglichkeit besteht darin, daß zunächst der Halbester $H-B^1-A-H$ wie oben beschrieben hergestellt und anschließend ein Äquivalent dieses Halbesters mit etwa einem Äquivalent eines Diols $H-B^2-H$ bzw. bevorzugt des entsprechenden Diepoxids kondensiert, bis die Säurezahl unter etwa 1 mg KOH/g gesunken ist. Nachfolgend wird etwa ein Äquivalent des so erhaltenen Diesters $H-B^1-A-B^2-H$ nochmals mit etwa einem Äquivalent einer Dicarbonsäure H-A-H bzw. deren Anhydrid kondensiert, um den entsprechenden Oligoester $H-B^1-A-B^2-A-H$ zu liefern.

Im zweiten Schritt werden dann wiederum entsprechende Mengen (Poly)glycidylamin bzw. Polyglycidylether mit dem vorbereiteten Oligoester umgesetzt, bis die Säurezahl unter etwa 2 mg KOH/g gesunken ist.

Ein anderer Weg besteht darin, daß der zuvor beschriebene Polyetherdiol-Diester $H-B^1-A-B^2-H$ mit etwa einem Äquivalent eines sekundären N-Alkylalkanolamins umgesetzt wird, bevor man durch eine weitere Kondensationsreaktion mit etwa einem Äquivalent einer Dicarbonsäure H-A-H bzw. deren Anhydrid zu dem Alkanolamin-modifizierten Oligoester gelangt.

Sodann wird wiederum (Poly)glycidylamin bzw. Polyglycidylether mit dem modifizierten Oligoester umgesetzt, bis die Säurezahl unter etwa 2 mg KOH/g gesunken ist.

Die in jeweils einem Schritt verwendeten Dicarbonsäuren H-A-H können gleich oder verschieden voneinander sein; es sind aromatische, araliphatische und cycloaliphatische Dicarbonsäuren mit 2 bis 20 C-Atomen geeignet bzw. deren Anhydride. Bevorzugt sind Tetrahydrophthalsäure und Maleinsäure; geeignet sind aber auch z.B. Fumarsäure, Itaconsäure, Endomethylentetrahydrophthalsäure, Adipinsäure, Bernsteinsäure, Tricyclo-[5,2, $1,0^{2,6}$]-decan-dicarbonsäure, Isophthalsäure, Terephthalsäure, ortho- und meta-Phthalsäure, bzw. deren Anhydride, soweit herstellbar.

Als Diole $H-B^1-H$ eignen sich z.B. Polyethylenoxid-Polypropylenoxidblockcopolymere mit einem Molekulargewicht von 3.500 bis 15.000 sowie Polyethylenoxid mit einem Molekulargewicht von 500 bis 6.000. Bevorzugt wird Polyethylenoxid mit einem Molekulargewicht von etwa 1.500.

Die Diole $H-B^1-H$ werden vorzugsweise in Form der entsprechenden $\alpha,\omega$-Diepoxide eingesetzt. Bevorzugte Diepoxide sind Diglycidylether von Bisphenolen mit einem Epoxidäquivalentgewicht von 165 bis 1.000.

Bevorzugter sekundärer N-Alkylaminoalkohol ist N-Butylethanolamin.

Hauptbestandteil des erfindungsgemäßen Schlichtemittels für Kohlenstoff-Fasern ist ein Epoxidharz. In Frage kommen dabei die üblichen Glycidylether von mono- oder polyfunktionellen, Alkoholen, vorzugsweise von aromatischen Alkoholen, mit Epoxidäquivalentgewichten von ungefähr 100 bis 1.500 g/Äg. Bevorzugt sind Diglycidylether von Bisphenol A und F.

Zur Herstellung der Schlichte werden 100 Gew.-Teile Epoxidharz mit 5 bis 40, insbesondere 8 bis 30 Gew.-Teilen des Emulgators zusammengegeben, erwärmt und unter Rühren bis zur Bildung einer klaren Schmelze homogenisiert. Danach wird unter intensiver Scherung, z.B. mittels eines hochtourig drehenden Dissolvers, portionsweise soviel kaltes Wasser zugesetzt, bis sich eine homogene Harz-in-Wasser Dispersion bildet, die dann durch weitere Wasserzugabe auf die gewünschte Anwendungskonzentration verdünnt werden kann. Vorzugsweise hat die fertige Dispersion eine Feststoff-Konzentration von 1 bis 10 Gew.-%.

Bei der so hergestellten Schlichte handelt es sich um eine sehr feinteilige Dispersion mit auch in hoher Verdünnung sehr guter Lager- und Scherstabilität ausgezeichneten Filmbildungseigenschaften sowie einer vorzüglichen Affinität zur Kohlenstoffaser.

Zum Applizieren des erfindungsgemäßen Schlichtemittels auf die Kohlenstoff-Fasern werden diese durch ein Tauchbad, welches die Schlichtedispersion enthält, hindurchgeführt und anschließend in einem Heißluftstrom bei ca. 140 °C getrocknet. Auf der Faser sollen sich dann etwa 0.3 bis 10, vorzugsweise 0.5 bis 2 Gew.-% des Schlichtemittels befinden.

Es versteht sich, daß das Zahlenverhältnis der am Emulgatormolekül fixierten reaktiven funktionellen Gruppen und emulgierend wirkenden Gruppen einerseits und die zum Dispergieren des jeweiligen Harzes erforderliche Menge andererseits voneinander in gewissen maß abhängig sind. Es sollte deswegen der Emulgator stets so gewählt werden, daß die zum Herstellen der Harzdispersionen erforderliche Menge die Mindestmenge darstellt. Ein zu hoher Emulgatorgehalt in dem Schlichtemittel führt dazu, daß insbesondere die Heiß-Feucht-Eigenschaften der Laminate, die die damit behandelten Fasern enthalten, nachteilig beeinflußt werden. Ist hingegen der Emulgatorgehalt in der zu dispergierenden Harzzubereitung zu niedrig, führt dies zu einer qualitativ unbefriedigenden Dispersion, die die geforderten Eigenschaften hinsichtlich Teilchengrößen und -verteilung, Lager- und Scherstabilität sowie Filmbildungseigenschaften nicht erfüllt.

Die bestgeeigneten Mengenverhältnisse werden zweckmäßig durch Vorversuche festgelegt, wobei die nachstehenden Beispiele als Anhaltspunkt dienen können.

A. Herstellung der Reaktiv-Emulgatoren

Beispiel I

In einem 4 l Dreihalskolben ausgerüstet mit Flügelrührer, Innenthermometer und Schutzgasanschluß werden 1475 g eines Polyethylenoxids mit einer OH-Zahl von 76 mg KOH/g (Pluriol® E 1500 der BASF AG) unter Rühren bei 100 °C mit 150 g Tetrahydrophthalsäureanhydrid versetzt. Nachdem die Temperatur auf 130 °C gesteigert worden ist, wird bei dieser Temperatur solange kondensiert, bis die Säurezahl etwa 34 mg KOH/g beträgt. Anschließend werden 504 g eines N,N,N',N'-Tetraglycidyl-p-diphenyldiaminomethan-Harzes mit einem potentiometrisch ermittelten Epoxidäquivalentgewicht von 126 g/Äq. (Araldite® MY 720 von Ciba-Geigy) eingesetzt. Man rührt solange bei dieser Temperatur, bis die Säurezahl unter 1 mg KOH/g beträgt. Das potentiometrisch ermittelte Epoxidäquivalentgewicht des Produktes beträgt 950 g/Äq.

Beispiel II

Zunächst wird, wie in Beispiel I beschrieben, der Halbester aus 1475 g Polyethylenoxid (Pluriol® E 1500 der BASF AG) und 150 g Tetrahydrophthalsäure hergestellt. Nach Zusatz von 380 g eines Diglycidylethers von Bisphenol A mit einem Epoxidäquivalentgewicht von 190 g/Äq. (Epikote® 828 von Shell) wird die Temperatur auf 160 °C erhöht und die Mischung bei dieser Temperatur belassen bis eine Säurezahl von 1 mg KOH/g erreicht ist. Man läßt bis auf 110 °C abkühlen und setzt 117 g N-Butyl-(ethanolamin) zu. Nach 1 h werden dann nochmals 150 g Tetrahydrophthalsäure hinzugefügt und die Temperatur auf 130 °C gesteigert. Die Mischung wird bei einer Temperatur belassen, bis die Säurezahl auf etwa 25 mg KOH/g abgesunken ist. Dann werden 504 g eines N,N,N',N'-Tetraglycidyl-p-diphenyldiaminomethan-Harzes mit einem Epoxidäquivalentgewicht von 126 g/Äq. (Araldite® MY 720 von Ciba-Geigy) zugesetzt. Man steigert die Temperatur auf 140 °C und rührt, bis die Säurezahl 1 mg KOH/g beträgt. Das potentiometrisch ermittelte Epoxidäquivalentgewicht des Produktes beträgt 1.030 g/Äq.

Beispiel III

Es wird wie in Beispiel I beschrieben verfahren, jedoch werden nun 378 g N,N,N',N'-Tetraglycidyl-p-diphenyldiaminomethan-Harz mit einem Epoxidäquivalentgewicht von 126 g/Äq. (Araldite® MY 720 von Ciba Geigy) eingesetzt.

Beispiel IV

Es wird wie in Beispiel I beschrieben verfahren, jedoch werden anstelle des dort verwendeten Glycidylamins nun 660 g eines Tetraphenylolethan-tetraglycidylether-Harzes mit einem Epoxidäquivalentgewicht von 200 g/Äq (Epikote 1031 von Shell) eingesetzt. Bei einer Temperatur von 90 °C rührt man solange, bis die Säurezahl unter 1 mg KOH/g gesunken ist. Das potentiometrisch ermittelte Epoxidäquivalentgewicht beträgt 1094 g/Äq, das dampfdruckosmometrisch ermittelte Molekulargewicht beträgt 2960 g/mol (Chloroform).

Beispiel V

Es wird wie in Beispiel I beschrieben verfahren, jedoch werden anstelle des dort verwendeten Glycidylamins nun 380 g eines Diglycidylethers von Bisphenol A mit einem Epoxidäquivalentgewicht von 190 g/Äq (DER 330 von Dow Chem.) eingesetzt. Bei einer Temperatur von 100 °C rührt man solange, bis die Säurezahl unter 1 mg KOH/g gesunken ist. Das potentiometrisch ermittelte Epoxidäquivalentgewicht beträgt 2096 g/Äq.

B. Herstellung der Epoxidharzdisperisonen

Beispiel VI

170 g eines Diglycidylethers von Bisphenol A mit einem Epoxidäquivalentgewicht von 190 g/Äq. (Epikote® 828 von Shell), 370 g eines Diglycidylethers von Bisphenol A mit einem Epoxidäquivalentgewicht von 475 g/Äq. (Epikote® 1001 von Shell) und 95 g des Beispiel I erhaltenen Reaktiv-Emulgators werden zusammengegeben und durch Erhitzen auf 70 °C und Rühren zu einer klaren Schmelze homogenisiert. Die

Heizquelle wird entfernt und man läßt bis auf ca. 65°C abkühlen. Bei dieser Temperatur wird die Harzschmelzzubereitung mittels einer mit 1.500 $min^{-1}$ drehenden Dissolverscheibe intensiv gerührt und währenddessen 300 g entionisiertes Wasser innerhalb ca. 30 min langsam zugegeben. Das so erhaltene Dispersionskonzentrat weist nun eine Temperatur von ca. 45°C auf. Anschließend wird die Drehzahl der Dissolverscheibe auf ca. 200 $min^{-1}$ reduziert und es werden weitere 655 g entionisiertes Wasser zum Einstellen einer Feststoff-Konzentration der Dispersion von etwa 40 Gew.-% zugesetzt.

Eigenschaften der Harzschmelzezubereitung vor dem Dispergieren:

| | | |
|---|---|---|
| * Epoxidäquivalentgewicht | : | 460 g/Äq. |
| * Brookfield-Viskosität bei 60°C | : | 32400 mPas |
| * Glasübergangstemperatur | : | -1°C |

Eigenschaften der erhaltenen wäßrigen Dispersion:

| | | |
|---|---|---|
| * Feststoffgehalt | : | 39.4 % |
| * Teilchengrößeverteilung | : | 90 % < 2.5 µm |
| | | 50 % < 1.5 µm |
| | | 10 % < 0.7 µm |
| * gravimetrische Stabilität der mit entionisiertem Wasser auf 3 % verdünnten Dispersion nach 24 h | : | 94.5 % |
| * Filmbildungseigenschaften | : | sehr gut |

Beispiel VII

Es wird wie in Beispiel IV verfahren, wobei sich die zu dispergierende Harzschmelzzubereitung zusammensetzt aus 139 g eines Diglycidylethers von Bisphenol A mit einem Epoxidäquivalentgewicht von 190 g/Äq (Epikote 828 von Shell), 303 g eines Diglycidylethers von Bisphenol A mit einem Epoxidäquivalentgewicht von 475 g/Äq (Epikote 1001 von Shell), 66 g eines N,N,N',N'-Tetraglycidyl-p-diphenyldiaminomethanharzes mit einem Epoxidäquivalentgewicht von 126 g/Äq (Araldite MY 720 von Ciba Geigy) und 127 g des nach Beispiel II hergestellten Emulgators.

Eigenschaften der Harzschmelzezubereitung vor dem Dispergieren:

| | |
|---|---|
| * Epoxidäquivalentgewicht (potentiometrisch): | 445 g/Äq. |
| * Brookfield-Viskosität bei 60°C : | 33500 mPas |
| * Glasübergangstemperatur (DSC) : | +3°C |

Eigenschaften der erhaltenen wäßrigen Dispersion:

| | |
|---|---|
| * Feststoffgehalt : | 37.8 % |
| * Teilchengrößeverteilung : | 90 % < 1.1 μm<br>50 % < 0.7 μm<br>10 % < 0.4 μm |
| * gravimetrische Stabilität der mit entionisiertem Wasser auf 3 % verdünnten Dispersion nach 24 h : | 99 % |
| * Filmbildungseigenschaften : | sehr gut |

Beispiel VIII

Es wird wie in Beispiel IV verfahren, wobei sich die zu dispergierende Harzschmelzzubereitung zusammensetzt aus 149 g eines Diglycidylethers von Bisphenol A mit einem Epoxidäquivalentgewicht von 190 g/Äq (Epikote 828 von Shell), 324 g eines Diglycidylethers von Bisphenol A mit einem Epoxidäquivalentgewicht von 475 g/Äq (Epikote 1001 von Shell), 36 g eines N,N,N',N'-Tetraglycidyl-p-diphenyldiaminomethanharzes mit einem Epoxidäquivalentgewicht von 126 g/Äq (Araldite MY 720 von Ciba Geigy) und 126 g des nach Beispiel III hergestellten Emulgators.

Eigenschaften der Harzschmelzezubereitung vor dem Dispergieren:

| | |
|---|---|
| * Epoxidäquivalentgewicht (potentiometrisch): | 675 g/Äq. |
| * Brookfield-Viskosität bei 60°C : | 35200 mPas |
| * Glasübergangstemperatur (DSC) : | +1°C |

Eigenschaften der erhaltenen wäßrigen Dispersion:

| | |
|---|---|
| * Feststoffgehalt : | 40.3 % |
| * Teilchengrößeverteilung : | 90 % < 3.1 μm<br>50 % < 1.7 μm<br>10 % < 0.8 μm |
| * gravimetrische Stabilität der mit entionisiertem Wasser auf 3 % verdünnten Dispersion nach 24 h : | 95.3 % |
| * Filmbildungseigenschaften : | gut |

Beispiel IX

Es wird wie in Beispiel VI verfahren, wobei anstelle des dort verwendeten Emulgators nun 99 g des nach Beispiel IV hergestellten Emulgators verwendet werden.

Eigenschaften der Harzschmelzezubereitung vor dem Dispergieren:

| | | |
|---|---|---|
| * Epoxidäquivalentgewicht (potentiometrisch) | : | 425 g/Äq. |
| * Brookfield-Viskosität bei 60°C | : | 35100 mPas |
| * Glasübergangstemperatur (DSC) | : | +2°C |

Eigenschaften der erhaltenen wäßrigen Dispersion:

| | | |
|---|---|---|
| * Feststoffgehalt | : | 37.2 % |
| * Teilchengrößeverteilung | : | 90 % < 2.7 μm<br>50 % < 1.2 μm<br>10 % < 0.8 μm |
| * gravimetrische Stabilität der mit entionisiertem Wasser auf 3 % verdünnten Dispersion nach 24 h | : | 95 % |
| * Filmbildungseigenschaften | : | gut |

Beispiel X

Es wird wie in Beispiel VI verfahren, wobei anstelle des dort verwendeten Emulgators nun 99 g des nach Beispiel V hergestellten Emulgators verwendet werden.

Eigenschaften der Harzschmelzezubereitung vor dem Dispergieren:

| | | |
|---|---|---|
| * Epoxidäquivalentgewicht (potentiometrisch) | : | 425 g/Äq. |
| * Brookfield-Viskosität bei 60°C | : | 36400 mPas |
| * Glasübergangstemperatur (DSC) | : | +3°C |

Eigenschaften der erhaltenen wäßrigen Dispersion:

| | | |
|---|---|---|
| * Feststoffgehalt | : | |
| * Teilchengrößeverteilung | : | 90 % < 1.0 μm<br>50 % < 0.6 μm<br>10 % < 0.3 μm |
| * gravimetrische Stabilität der mit entionisiertem Wasser auf 3 % verdünnten Dispersion nach 24 h | : | 99 % |
| * Filmbildungseigenschaften | : | sehr gut |

## Ansprüche

1. Schlichtemittel für Kohlenstoff- und Glasfasern auf der Grundlage einer wäßrigen Dispersion, enthaltend ein Epoxidharz und 5 bis 40 Gew.-%, bezogen auf das Epoxidharz, eines nichtionischen Emulgators, dadurch gekennzeichnet, daß der Emulgator tertiäre Aminogruppen und/oder Etherbrücken enthält, und mindestens einen mit dem Epoxidharz umsetzungsfähigen, funktionellen Rest und mindestens einen emulgierend wirkenden Rest aufweist.

2. Schlichtemittel nach Anspruch 1, dadurch gekennzeichnet, daß der funktionelle Rest ein Glycidyl-Rest ist und der emulgierend wirkende Rest endständig eine Polyethylenglykolgruppe trägt.

3. Schlichtemittel nach Anspruch 1, dadurch gekennzeichnet, daß der Emulgator die Struktur IV aufweist

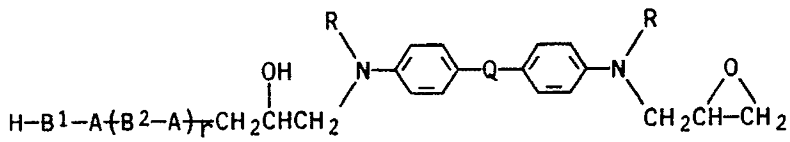

(IV)

wobei die Symbole folgende Bedeutung haben:

R ist der Rest

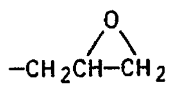 oder 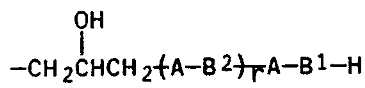

Q ist der Rest $-CH_2-$ oder

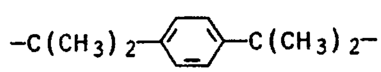

A ist der Rest einer gesättigten oder ungesättigten aliphatischen oder cycloaliphatischen, oder einer aromatischen oder araliphatischen Dicarbonsäure mit 2 bis 20 C-Atomen,

$B^1$ ist der Rest eines Polyetherdiols der Struktur $[X_m,Y_n]$, wobei X Einheiten des Ethylenglykols und Y Einheiten des Propylenglykols bezeichnen, m einen Wert von 10 bis 500 und n Null oder ein Wert bis 100 bedeuten, wobei ferner X und Y in Blöcken oder in statistischer Verteilung angeordnet sind mit der Maßgabe, daß sich am terminalen Ende mindestens 10 X-Einheiten befinden,

$B^2$ ist der Rest eines Diols, und

r ist Null oder eine ganze Zahl bis 5.

4. Schlichtemittel nach Anspruch 1, dadurch gekennzeichnet, daß der Emulgator die Struktur I

(I)

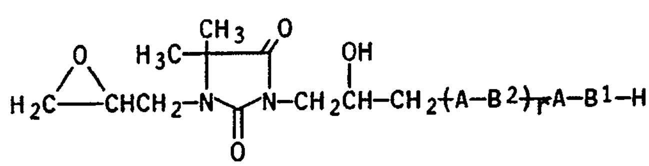

aufweist, wobei A, $B^1$, $B^2$ und r die in Anspruch 3 angegebene Bedeutung haben.

5. Schlichtemittel nach Anspruch 1, dadurch gekennzeichnet, daß der Emulgator die Struktur II

(II)

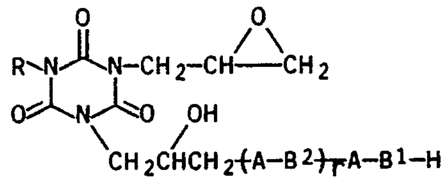

aufweist, wobei A, R, $B^1$, $B^2$ und r die in Anspruch 3 angegebene Bedeutung haben.

6. Schlichtemittel nach Anspruch 1, dadurch gekennzeichnet, daß der Emulgator die Struktur III

(III)

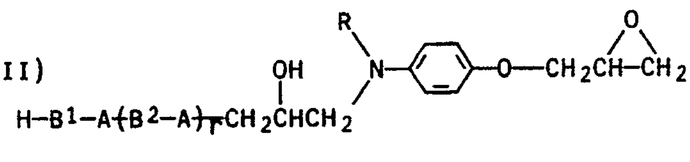

aufweist, wobei A, R, $B^1$, $B^2$ und r die in Anspruch 3 angegebene Bedeutung haben.

7. Schlichtemittel nach Anspruch 1, dadurch gekennzeichnet, daß der Emulgator die Struktur V

(V)

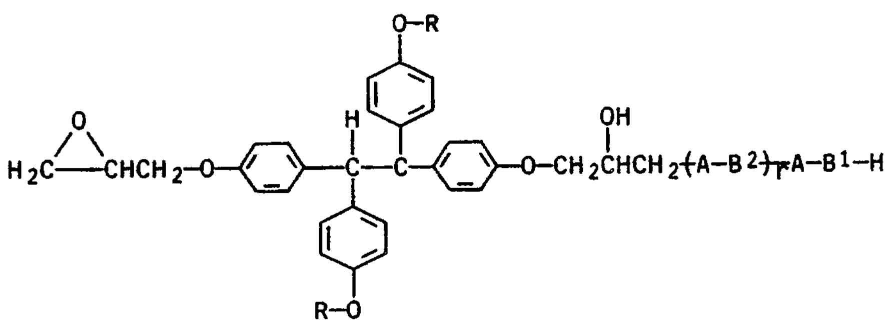

aufweist, wobei R, A, $B^1$, $B^2$ und r die in Anspruch 3 angegebene Bedeutung haben.

8. Schlichtemittel nach Anspruch 1, dadurch gekennzeichnet, daß der Emulgator die Struktur VI

(VI)

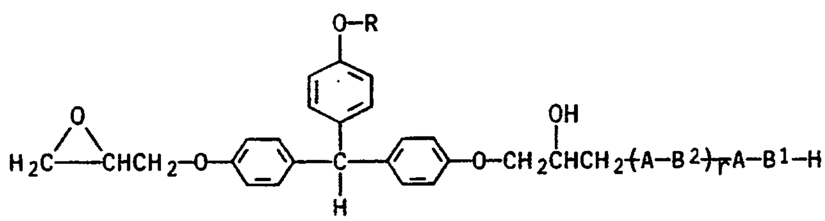

aufweist, wobei R, A, $B^1$, $B^2$ und r die in Anspruch 3 angegebene Bedeutung haben.

9. Schlichtemittel nach Anspruch 1, dadurch gekennzeichnet, daß der Emulgator die Struktur VII

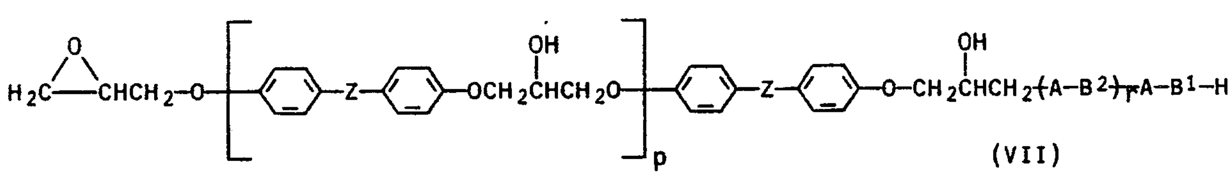

(VII)

aufweist, wobei

Z der Rest $-C(CH_3)_2-$, $-CH_2-$ oder $-S(O)_2-$ ist,
p Null oder eine ganze oder gebrochene Zahl bis 5 ist,

und die Symbole A, $B^1$, $B^2$ und r die in Anspruch 3 angegebene Bedeutung haben.

**10.** Schlichtemittel nach Anspruch 1, dadurch gekennzeichnet, daß der Emulgator die Struktur VIII

(VIII) 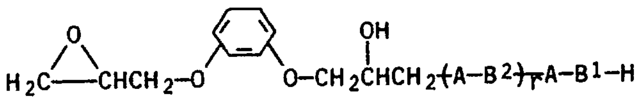

aufweist, wobei A, $B^1$, $B^2$ und r die in Anspruch 3 angegebene Bedeutung haben.

**11.** Schlichtemittel nach Anspruch 1, dadurch gekennzeichnet, daß das Epoxidharz ein Polyglycidylether eines aromatischen Polyalkohols mit einem Epoxidäquivalentgewicht von 100 bis 1500 g/Äq. ist.

**12.** Kohlenstoff-Fasern, die 0.3 bis 10 Gew.-% des Schlichtemittels nach einem der Ansprüche 1 bis 11 tragen.

**13.** Glasfasern, die 0,3 bis 10 Gew.-% des Schlichtemittels nach einem der Ansprüche 1 bis 11 tragen.

Europäisches Patentamt

# EUROPÄISCHER RECHERCHENBERICHT

Nummer der Anmeldung

EP 90124170.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| D,X | DE - A1 - 2 606 623 (ASAHI KASEI KOGYO K.K.) * Ansprüche * -- | 1,3,12 | D 01 F 11/14<br>C 03 C 25/02<br>C 08 L 63/02<br>C 08 F 2/30<br>C 08 J 5/10 |
| D,X | US - A - 4 654 264 (ASAI et al.) * Ansprüche * ---- | 1,9,12 | |

RECHERCHIERTE SACHGEBIETE (Int Cl 5)

D 06 M
C 03 C
C 03 B
D 01 F
C 08 F
C 08 G
C 08 J
C 08 K
C 08 L
B 32 B

Der vorliegende Recherchenbericht wurde für alle Patentansprüche erstellt

| Recherchenort | Abschlußdatum der Recherche | Prüfer |
|---|---|---|
| WIEN | 09-04-1991 | SCHÄFER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument